# EUROPÄISCHE PATENTANMELDUNG

(11) **EP 4 703 315 A1**
(43) Veröffentlichungstag der Anmeldung: **04.03.2026**
(21) Anmeldenummer: 24196482.4
(22) Anmeldetag: 26.08.2024
(51) Int. Cl.: B66C 13/46, B66C 15/00, B66C 23/00, G05B 23/02

(54) **EIN COMPUTERIMPLEMENTIERTES VERFAHREN ZUM IDENTIFIZIEREN VON TÄTIGKEITEN EINES KRANS, KRANSTEUERUNG UND KRAN**

(71) Anmelder: Palfinger AG, 5101 Bergheim bei Salzburg (AT)
(72) Erfinder: STRASSER, Johann, 5201 Seekirchen am Wallersee (AT); VAR O, Philipp, 83395 Freilassing (DE)
(74) Vertreter: 2SPL Patentanwälte PartG mbB

(57) **Zusammenfassung**

Vorgeschlagen wird ein computerimplementiertes Verfahren (100) zum Identifizieren von Tätigkeiten eines Krans, umfassend das Empfangen eines Satzes von Messwerten von Sensoren (110), die einen zeitlichen Verlauf von Betriebsparametern des Krans wiedergeben; und Bestimmen einer von dem Kran durchgeführten Tätigkeit (120) basierend auf dem Satz von Messwerten von Sensoren und einem maschinell erlernten Modell des Krans.

## Beschreibung

### Technisches Gebiet

Die vorliegende Offenbarung betrifft ein computerimplementiertes Verfahren zum Identifizieren von Tätigkeiten eines Krans sowie eine dieses ermöglichende Kransteuerung.

### Hintergrund

Kranoperationen zeichnen sich durch ihre Vielseitigkeit und die Vielzahl an Freiheitsgraden aus, die durch die verschiedenen Bewegungsmöglichkeiten der Kranarme ermöglicht werden. Ein typischer LKW-montierter Kran verwendet verschiedene Aktuatoren wie Hydraulikzylinder oder Elektromotoren, um komplexe Bewegungen wie das Verlängern und Knicken von Kranarmen oder das Drehen einer Kransäule auszuführen.

Ein Kran kann durch die Bewegung seiner Arme und Verlängerungen, die durch Hydraulikzylinder gesteuert werden, verschiedene Ziele auf unterschiedlichen Wegen bzw. mittels unterschiedlicher Bewegungsabfolgen erreichen. Zum Beispiel kann ein Lastenhub zu einer bestimmten Zielposition durch die Verlängerung eines Kranarms und anschließendes Knicken erfolgen oder umgekehrt. Diese unterschiedlichen Bewegungsabfolgen resultieren in unterschiedlichen kinematischen Mustern, obwohl das Endziel dasselbe ist. Die Vielzahl der Freiheitsgrade macht es schwierig, einfache Muster zu identifizieren, die eindeutig auf das Heben einer Last hinweisen.

Die Belastung auf die einzelnen Kranbauteile variiert stark abhängig von der Reihenfolge der Bewegungen. Wenn der Kranarm beispielsweise zuerst geknickt und dann verlängert wird, ist die Last auf den Hydraulikzylinder zum Knicken geringer, als wenn das Knicken nach der Verlängerung erfolgt. Diese Unterschiede in den Belastungen führen zu unterschiedlichen Druckmustern in den Hydraulikzylindern. Unterschiedliche Tätigkeiten können daher die nicht allein durch die Betrachtung der Abfolge der Veränderung der Stellgrößen der Aktoren zuverlässig differenziert werden.

Da verschiedene Bewegungsabfolgen zur Erreichung desselben Ziels führen können, ergeben sich auch unterschiedliche kinematische Parameter wie Winkel, Längen und Geschwindigkeiten der Kranarme. Auch ein einfacher Mustervergleich dieser Parameter würde keine konsistenten Hinweise darauf geben, ob z. B. eine Last gehoben wurde, da die Parameter je nach gewählter Bewegungsabfolge stark variieren können.

Die kinematischen Muster eines Krans beinhalten Bewegungen wie Drehen, Verlängern und Knicken der Arme. Diese Bewegungen sind sowohl bei beladenen als auch bei unbeladenen Operationen notwendig. Da die gleichen kinematischen Muster sowohl beim Heben von Lasten als auch bei Leerfahrten auftreten können, lässt sich allein durch die Analyse dieser Muster nicht bestimmen, ob eine Last gehoben wurde.

Die Last, die an der Spitze des Auslegersystems befestigt ist, beeinflusst die Bewegung und Belastung des gesamten Kransystems. Diese Wechselwirkungen sind komplex und variieren je nach Lastgewicht, Schwerpunkt und Position. Ein einfacher kinematischer Mustervergleich kann diese komplexen Wechselwirkungen nicht vollständig erfassen, was die Bestimmung des Lastzustands weiter erschwert.

Zusammengefasst ist es aufgrund der vielfältigen Bewegungsmöglichkeiten, variierenden Belastungen und fehlenden direkten Korrelationen zwischen kinematischen Mustern und Lasten nicht möglich, mit einfachem Mustervergleich der kinematischen Größen eines Krans zuverlässig zu bestimmen, ob eine Last gehoben wurde oder welche Tätigkeit mittels eines Krans verrichtet wurde.

Es besteht somit ein Bedarf für ein Konzept, dass es ermöglicht, zuverlässig die Tätigkeiten zu identifizieren, die mittels eines Krans vorgenommen wurden.

### Zusammenfassung

Ein Beispiel befasst sich mit einem computerimplementierten Verfahren zum Identifizieren von Tätigkeiten eines Krans. Das Verfahren umfasst das Empfangen eines Satzes von Messwerten von Sensoren, die Betriebsparameter des Krans für zumindest einen bestimmten Zeitraum erfassen. Das Verfahren umfasst ferner das Bestimmen einer von dem Kran durchgeführten Tätigkeit basierend auf dem Satz von Messwerten von Sensoren und einem erlernten Modell des Krans. Die Verwendung eines erlernten Modells zur Erkennung von Lasthebungen oder anderen Tätigkeiten bei einem Kran kann die Tätigkeiten des Krans identifizieren, da ein solches Modell in der Lage ist, die komplexen Zusammenhänge und Muster zu erkennen, die einfache kinematische Analysen nicht erfassen können. Ein erlerntes Modell, das beispielsweise auf umfangreichen Trainingsdaten basiert, kann in der Lage sein, komplexe Muster und Zusammenhänge zwischen den verschiedenen Sensorwerten zu erkennen, die für das Heben von Lasten charakteristisch sind. Diese Muster können verschiedene kinematische Parameter, Belastungen auf die Hydraulikzylinder, Winkeländerungen und Druckverhältnisse umfassen, die zusammen eine Erkennung ermöglichen. Ein erlerntes Modell kann Daten von verschiedenen Sensoren integrieren, darunter Positionssensoren, Neigungssensoren, Drucksensoren und Kraftsensoren. Durch die Kombination dieser Daten kann das Modell ein umfassendes Bild des Kranzustands und der Lastwechselwirkungen erstellen. Diese Integration erlaubt es dem Modell, subtile Unterschiede zwischen beladenen und unbeladenen Zuständen zu erkennen, die durch die Analyse einzelner (kinematischer) Parameter oder sogar durch die Analyse einer vordefinierten Sequenz von Zustandsänderungen einzelner oder mehrerer Parameter nicht erfassbar sind.

Lastwechselwirkungen und die damit verbundenen kinematischen und dynamischen Parameter können hochgradig nichtlinear sein. Ein erlerntes Modell, beispielsweise ein neuronales Netzwerk, ist in der Lage, solche nichtlinearen Beziehungen zu lernen und zu modellieren. Dies ermöglicht es, präzise Vorhersagen darüber zu treffen, ob eine Last gehoben wird, selbst wenn die zugrunde liegenden Beziehungen komplex und nichtlinear sind. Ein gut trainiertes bzw. erlerntes Modell kann robust gegenüber Variabilitäten im Betrieb sein, wie z.B. unterschiedlichen Lastgewichten, Umweltbedingungen oder Verschleiß der Krankomponenten. Durch die Berücksichtigung einer Vielzahl von Betriebsbedingungen im Trainingsprozess kann das Modell verlässliche Vorhersagen treffen, auch wenn die Bedingungen variieren.

Die Betriebsparameter des Krans, die verwendet werden, können beispielsweise einer oder mehrere Drehwinkel, Knickwinkel, Schubstellungen und Hydraulikdrücke umfassen.

Gemäß einigen Beispielen kann das Modell des Krans mit einem neuronalen Netzwerk erlernt sein, das mittels real aufgezeichneter Trainingsdaten trainiert ist.

Einige Ausführungsbeispiele umfassen ferner das Aktualisieren eines die Tätigkeit angebenden Zählers mit einem Wert, der auf dem Ausgabeparameter basiert. Dies kann es beispielsweise ermöglichen, den Verschleiß eines Krans, der durch unterschiedliche Tätigkeiten unterschiedlich beeinflusst wird, zu beobachten oder erforderliche Wartungen vorherzusagen, wenn beispielsweise der Zähler basierend auf dem Ausgabeparameter erhöht wird.

Gemäß einigen Ausführungsbeispielen wird ein Hub einer Last mittels des Krans angezeigt, was es ermöglichen kann, einen Verschleiß aller oder nur bestimmter Komponenten eines Krans zu bewerten.

Gemäß einigen Ausführungsbeispielen wird ergänzend oder alternativ ein Typ des Hubes angegeben. Der Typ des Hubes kann zumindest durch eine an dem Hub beteiligte Komponente charakterisiert sein. Beispielsweise kann zwischen verschiedenen Lasten und schweren, mittleren oder leichten Hüben unterschieden werden. Dabei kann sich die Charakterisierung bzw. die Unterscheidung zwischen beispielsweise leicht, mittel und schwer an der gehobenen Last selbst oder an dem durch den Hubvorgang begünstigten Verschleiß des Krans orientieren.

Gemäß einigen Ausführungsbeispielen erfolgt ein Beschränken einer mit dem Kran bewegbaren Last basierend auf dem Zählerstand. Fortschreitender Alterung bzw. Verschleiß kann dadurch Rechnung getragen werden, dass nicht mehr so hohe Lasten bewegt werden können, wenn ein vorgegebenes Verschleißniveau erreicht ist. Die kann beispielsweise eine wartungsfreie sichere Nutzungsdauer eines Kranes erhöhen.

Einige Ausführungsbeispiele umfassen ferner ein Ausgeben eines Wartungssignals, das die erforderliche Wartung zumindest einer Komponente des Krans anzeigt, wenn der Zähler einen Referenzwert erreicht.

Gemäß einigen Ausführungsbeispielen kann das Verfahren von einem Prozessor in einer Kransteuerung ausgeführt werden, sodass beispielsweise eine Nutzungshistorie und ein sich daraus ableitender Verschleißgrad eines Krans zusammen mit dem Kran selbst in dessen Steuergerät protokolliert wird.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 ein Flussdiagramm eines Ausführungsbeispiels des Verfahrens;
Fig. 2 ein schematisches Blockdiagramm einer Kransteuerung;
Fig. 3 ein Ausführungsbeispiel eines Krans;
Fig. 4a-c unterschiedliche Zustände während eines Hubes einer Last mittels eines Krans;
Fig. 5 Messwerte verschiedener Sensoren eines Krans während der Hubes der Fig. 4;
Fig. 6a-c unterschiedliche Zustände während eines anderen Hubes einer Last mittels eines Krans; und
Fig. 7 Messwerte verschiedener Sensoren eines Krans während der Hubes der Fig. 6.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Wie eingangs dargelegt, ist die Kinematik eines Krans mit mehreren Knickelementen, der beispielsweise auf einen LKW montiert werden kann, äußerst komplex. Ein Kran umfasst ein Armsystem, das an einer Säule des Krans montiert ist. Die Säule ist im Verhältnis zu einem Kranfundament drehbar. In einigen Beispielen kann die Rotationsachse der Säule eine im Wesentlichen vertikale Achse sein. Der Rotationswinkel um die Rotationsachse kann als Schwenkwinkel bezeichnet werden.

Das Fundament kann so konfiguriert sein, dass der Kran auf einer Plattform montiert werden kann. Die Plattform kann eine feste Plattform oder eine mobile Plattform sein. Beispiele für mobile Plattformen sind Fahrzeuge wie Lastwagen, LKWs oder Schiffe. Das Armsystem kann relativ zur Säule um eine Achse (z.B. eine Armachse) gedreht oder bewegt werden, die im Wesentlichen senkrecht zur Rotationsachse der Säule ist. Der Rotationswinkel des Armsystems um die Armachse kann als Neigungswinkel bezeichnet werden.

Hydraulikzylinder können als Aktuatoren verwendet werden, um die Kraft zu erzeugen, die erforderlich ist, um das Armsystem in Bezug auf den Neigungswinkel zu drehen oder zu bewegen. Ein Armsystem umfasst mindestens einen Arm. Im Falle einer Mehrzahl von Armen (z.B. mehr als ein Arm) kann der an der Säule befestigte Arm als Hauptarm oder erster Arm bezeichnet werden. Zusätzlich kann ein zweiter Arm, der am Hauptarm befestigt ist, als Knickarm bezeichnet werden. Jeder (oder jeder einzelne) der Arme eines Armsystems kann optional ein oder mehrere Verlängerungsarme umfassen, die beispielsweise hydraulisch ein-oder ausgefahren werden können. Ein Arm und seine Verlängerungsarme können auch als Armsubsystem bezeichnet werden.

Kräne, die nur einen Arm haben, können auch als Kräne mit starrem Arm bezeichnet werden, da sie keine mehreren Arme aufweisen, die ihre Ausrichtung zueinander ändern können. Bei Kränen mit mehreren Armen kann ein Gelenk verwendet werden, um die verschiedenen Arme miteinander zu verbinden, sodass sie ihre relative Ausrichtung durch Biegen oder Abknicken um eine durch das Gelenk definierte Achse ändern können.

In einigen Beispielen kann ein Kran ein variables Armsystem umfassen, das mit der Kransäule verbunden ist. Ein variables Armsystem kann einen ersten Arm umfassen, wobei ein erstes Ende des ersten Arms mit der Kransäule verbunden ist. Das variable Armsystem kann ferner einen zweiten Arm umfassen, wobei der zweite Arm mit einem zweiten Ende des ersten Arms verbunden ist. Kräne, die mindestens zwei Arme haben, die durch einen Knick oder ein Scharnier verbunden sind, bieten einen zusätzlichen Freiheitsgrad im Vergleich zu starren Auslegerkränen und können als Knickarmkräne bezeichnet werden. Die Arme können durch Hydraulikzylinder über das Gelenk miteinander verbunden sein, um die Drehung zu bewirken.

Das freie Ende des Armsystems, das nicht an der Säule befestigt ist, kann als Spitze des Armsystems bezeichnet werden. Lasten können direkt an der Spitze des Armsystems befestigt werden. Kräne können jedoch zusätzlich mindestens eine Winde umfassen, die am Armsystem oder an anderer Stelle am Kran montiert ist und dazu verwendet wird, ein die Last tragendes Kabel auf- und abzuwickeln. Die Spitze des Armsystems kann ein Rad für das Kabel aufweisen. Das Kabel erstreckt sich zu einem Lastblock, an dem die Last befestigt wird. In einem Einseilbetrieb (auch STRAN1 genannt) endet das Kabel im Lastblock. Das Kabel der Winde kann auch nach den Prinzipien einer Umlenkrolle verwendet werden. In diesem Fall weist der Lastblock mindestens eine Umlenkrolle auf, um die Richtung des Kabels zu ändern, und das Kabel endet am Armsystem, typischerweise nahe der Spitze des Armsystems. Bei einer einzelnen Umlenkrolle wird der Betrieb auch als Zweiseilbetrieb (STRAN2) bezeichnet. Natürlich können auch mehrere Umlenkrollen für den Mehrseilbetrieb verwendet werden.

Die Bewegung des Krans wird durch den Einsatz mehrerer Aktuatorentypen wie Hydraulikmotoren, Ventile und Zylinder zur Bewegung der Arme und Elektromotoren zur Bewegung der Säule oder zum Betrieb der Winde verursacht. Komponenten, die zur Bewegung des Krans oder von Teilen des Krans verwendet werden, werden als Aktuatoren bezeichnet. Die Bewegung des Krans wird durch mehrere Sensoren überwacht, die Sensorwerte liefern, die auf verschiedene Parameter oder physikalische Größen hinweisen. Beispielsweise können Drucksensoren verwendet werden, um den Druck in Hydraulikzylindern zu überwachen, um die auf sie wirkenden Kräfte zu bestimmen. Winkelsensoren können verwendet werden, um die relative Drehung oder den Winkel zwischen verschiedenen Teilen des Krans zu überwachen (z.B. zwischen der Säule und dem Fundament oder zwischen verschiedenen Armen eines Knickarmkrans). Winkelsensoren können beispielsweise ein Kodiererrad zusammen mit einem magnetfeldempfindlichen Sensor verwenden. Längensensoren können verwendet werden, um die Gesamtlänge eines Auslegers und seiner zugehörigen Verlängerungen zu überwachen. Kraftsensoren können verwendet werden, um die Kraft direkt oder indirekt zu messen, beispielsweise um die Kraft zu messen, die auf das Kabel einer Winde und/oder auf die Winde selbst wirkt. Kraftsensoren können beispielsweise auf dem piezoelektrischen Effekt basieren oder Dehnungsmessstreifen verwenden, die an dem zu überwachenden Objekt angebracht sind.

Die Bewegung des Krans kann durch eine Kransteuerung gesteuert werden, der Steuersignale ausgibt, um die Aktuatoren des Krans zu veranlassen, eine Operation durchzuführen. Ebenso empfängt die Kransteuerung Sensorwerte, um das Ergebnis der Aktuatoroperation zu überwachen. In einigen Beispielen kann die Kransteuerung ein integraler Bestandteil des Krans sein. Die gewünschte Bewegung des Krans wird typischerweise basierend auf oder nach einer Benutzereingabe ausgeführt oder gesteuert. Die Benutzereingabe kann manuell durch einen menschlichen Bediener oder Aufseher des Krans erfolgen, oder sie kann auch automatisch basierend auf einem Algorithmus oder auf Eingabeparametern erfolgen, die durch andere Mittel generiert werden. Für die manuelle Eingabe kann der Kran ein kranmontiertes Eingabegerät (Bedienfeld) mit beispielsweise einem oder mehreren Hebeln oder Joysticks zur Steuerung der Bewegung sowie eine Benutzerschnittstelle zur Eingabe oder Änderung von Benutzereinstellungen und/oder Kranparametern wie beispielsweise verschiedenen Betriebsmodi des Krans aufweisen. Das Eingabegerät kommuniziert mit der Kransteuerung, der die Benutzereingabe in die erforderlichen Aktuatoroperationen umsetzt, um die gewünschte Bewegung gemäß der Eingabe über das Eingabegerät zu erzielen. Zusätzlich oder alternativ können Teile oder alle Eingaben, die über das Eingabegerät durchgeführt werden können, auch über eine drahtlose Fernbedienungseinheit erfolgen, die drahtlos mit der Kransteuerung kommuniziert.

Ein Kran kann für mehrere Zwecke verwendet werden, indem die Möglichkeit besteht, Ausrüstungen auszutauschen, die an den Armen des Krans montiert sind. Beispielsweise können verschiedene Anbaugeräte an den Armen in der Nähe der Spitze des Armsystems montiert werden. Um dies zu unterstützen, kann der Kran eine Montagefläche in der Nähe der Spitze des Krans bereitstellen. Eine Montagefläche kann aus mehreren Elementen bestehen, die an einem Arm montiert oder verschweißt sind. Schließlich kann Ausrüstung wie ein Arbeitskorb über einen Adapter, der die (standardmäßige) Montagefläche des Krans an eine kundenspezifische Montagefläche der zu verwendenden Ausrüstung anpasst, an der Montagefläche angebracht werden.

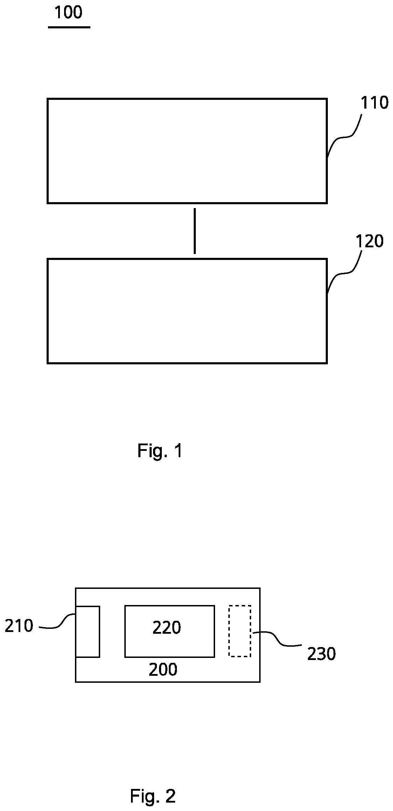

Figur 1 zeigt ein Flussdiagramm eines Ausführungsbeispiels eines Verfahrens 100 zum Identifizieren von Tätigkeiten eines Krans. Das Verfahren umfasst das Empfangen eines Satzes von Messwerten von Sensoren 110, die einen zeitlichen Verlauf von Betriebsparameter des Krans wiedergeben.

Das Verfahren umfasst ferner das Bestimmen einer von dem Kran durchgeführten Tätigkeit 120 basierend auf dem Satz von Messwerten von Sensoren und einem maschinell erlernten Modell des Krans.

Abhängig von der Implementierung können die Betriebsparameter blockweise (in diskreten Zeitintervallen) ausgewertet werden. In einigen Implementierungen können sich aufeinanderfolgende Zeitintervalle auch überlappen. In weiteren Implementierungen können die Betriebsparameter auch kontinuierlich ausgewertet werden. Das heißt, die Messwerte der Sensoren werden kontinuierlich empfangen und verarbeitet und nicht in Einheiten diskreter Zeitintervalle.

Das Bestimmen der Tätigkeit kann mittels verschiedener Ausgabeparameter des erlernten Modells erfolgen. Verwendet man zum Beispiel ein Klassifizierungsnetzwerk für das Modell, kann als Ausgangsparameter ein einzelner numerischer Parameter erzeugt werden, der eine von mehreren Tätigkeiten repräsentiert. Es können jedoch auch mehrere Ausgangsparameter an den Knoten eines Ausgangslayers eines neuronalen Netzes erzeugt werden, wobei jeder Parameter beispielsweise die Wahrscheinlichkeit einer bestimmten Tätigkeit, beispielsweise eines Hubes mit hoher Last angibt.

Neben Deep Learning können alternativ auch probabilistischen Modelle verwendet werden, wie beispielsweis Hidden Markov Modelle. Auch diese werden mit geeigneten Trainingsdaten trainiert, sodass durch das Training ebenso wie im Fall eines neuronalen Netzes ein Modell des Krans maschinell erlernt wird. Ein Hidden-Markov-Modell (HMM) ist ein statistisches Modell, das verwendet wird, um Systeme zu beschreiben, die als Markov-Prozess mit verborgenen Zuständen dargestellt werden können. In einem HMM sind die Zustände des Systems nicht direkt beobachtbar. Stattdessen beobachtet man Ausgaben (Emissionen), die durch diese versteckten Zustände erzeugt werden.

Das Modell besteht aus einer endlichen Anzahl von versteckten Zuständen, und es gibt Übergangswahrscheinlichkeiten, die beschreiben, wie wahrscheinlich es ist, von einem Zustand in den nächsten zu wechseln. Jeder Zustand hat auch eine Emissionswahrscheinlichkeit, die angibt, wie wahrscheinlich es ist, eine bestimmte Beobachtung zu erzeugen, wenn sich das System in diesem Zustand befindet. Zudem gibt es Anfangszustandswahrscheinlichkeiten, die die Wahrscheinlichkeit beschreiben, dass das System in einem bestimmten Zustand startet.

Um ein HMM zu trainieren, werden die Modellparameter - die Übergangswahrscheinlichkeiten, die Emissionswahrscheinlichkeiten und die Anfangszustandswahrscheinlichkeiten - so geschätzt, dass sie die beobachteten Daten möglichst gut erklären. Dies geschieht beispielsweise mit dem Baum-Welch-Algorithmus, einer speziellen Form des Expectation-Maximization (EM)-Algorithmus.

Auch der Viterbi-Algorithmus kann hierzu verwendet werden. Dieser ist ein dynamischer Programmieralgorithmus, der verwendet wird, um die wahrscheinlichste Sequenz von versteckten Zuständen zu finden, die eine gegebene Folge von Beobachtungen erzeugt haben könnte. Dieser Algorithmus bietet eine effiziente Methode, die Zustandsfolge zu berechnen, die die Beobachtungssequenz am besten erklärt.

Aufgrund der Komplexität der Zusammenhänge und der unterschiedlichen Kombinationen von Bewegungen, die dieselbe Tätigkeit durchführen können, werden die Trainingsdaten zum Trainieren der Modelle, also zum maschinellen Erlernen des Modells, gewonnen, indem tatsächliche Bewegungen des Krans durchgeführt und die sich währenddessen ergebenden Messwerte der Sensoren aufgezeichnet werden. Dabei werden beispielsweise die Druckverläufe in Hydraulikzylindern and Gelenken oder in Verlängerungsarmen gemessen, Winkelstellungen eines Winkelsensors, Längenmessungen eines Längensensors, Stromverläufe an Elektromotoren und ähnliches. Auch Sensoren, die die Umgebung wahrnehmen, wie beispielsweise Kameras, Radar- und Lidarsensoren können ergänzend verwendet werden.

Systematisch kann für die Aufbereitung der Trainingsdaten beispielsweise so vorgegangen werden, dass für jede zu bestimmende Tätigkeit zunächst eine Mehrzahl von möglichen Trajektorien der Bewegung (Bewegung der Spitze des Armsystems) festgelegt wird und dass für jede der Trajektorien eine Mehrzahl von Kranfahrten durchgeführt wird, bei denen die Messwerte aufgezeichnet werden. Dabei können die Trajektorien bei unterschiedlichen Umgebungsbedingungen, insbesondere Temperaturen, abgefahren werden und die Trajektorien können für das Aufzeichnen der Trainingsdatensätze leicht variiert werden.

Basierend auf den derart gewonnenen Trainingsdaten kann darauffolgend das Modell des Krans zur Klassifizierung der Tätigkeiten maschinell erlernt werden, wobei das Lernen sich im Detail je nach dem gewählten Modell unterscheiden kann.

Figur 2 zeigt ein schematisches Blockdiagramm einer Kransteuerung 200. Die Kransteuerung 200 umfasst eine Eingangsschnittstelle 210 zum Empfangen eines Satzes von Messwerten von Sensoren, die Betriebsparameter eines Krans für ein bestimmtes Zeitintervall erfassen. Ein Prozessor 220 ist ausgebildet zum Bestimmen einer von dem Kran durchgeführten Tätigkeit basierend auf dem Satz von Messwerten von Sensoren und einem maschinell erlernten Modell des Krans.

Optional kann die Kransteuerung 200 einen Speicher 230 zum Speichern eines Zählers aufweisen, der basierend auf der bestimmten Tätigkeit aktualisiert wird.

Eine Kransteuerung umfasst ferner eine Steuerungsschaltung, die ausgebildet ist, Aktuatoren des Krans zu steuern. Dabei kann die Steuerungsschaltung optional zumindest einen kinematischen Parameter zumindest eines Aktuators zu beschränken, wenn der Zähler einen Referenzwert erreicht.

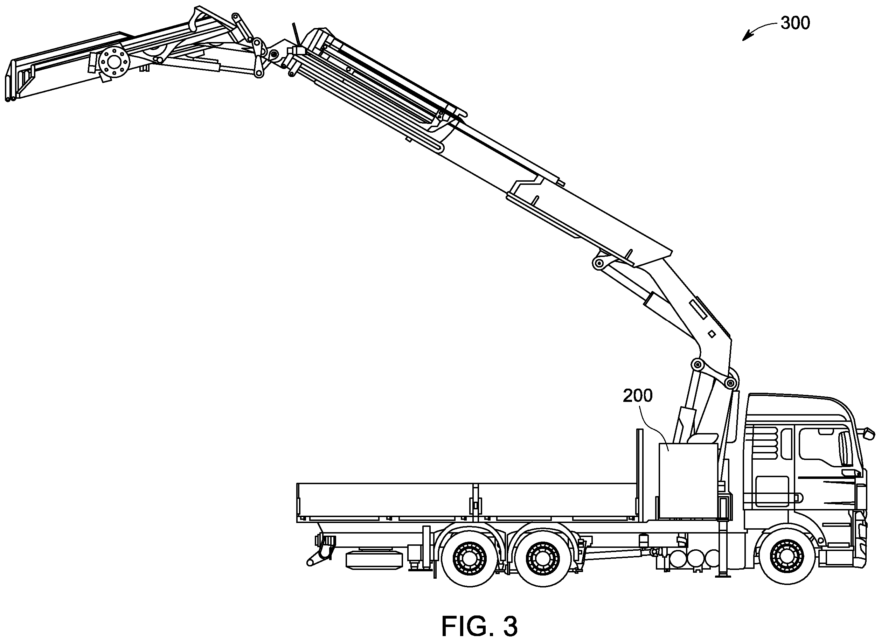

Fig. 3 ein Ausführungsbeispiel eines Krans 300, der von einer Kransteuerung 200 der Fig. 2 gesteuert wird. Die Kransteuerung 200 steuert die Aktoren des Krans an, um einer Benutzervorgabe für die Bewegung der einzelnen Elemente des Krans zu folgen. Gleichzeitig kann die Kransteuerung die vom Benutzer durchgeführte Tätigkeit automatisch erkennen (klassifizieren) und optional alle oder bestimmte Tätigkeiten zählen. Dadurch kann beispielsweise ein Verschleiß eines Krans, der durch unterschiedliche Tätigkeiten unterschiedlich beeinflusst wird, dokumentiert werden oder es können erforderliche Wartungen vorhergesagt oder angezeigt werden. Auch das bloße Speichern der Information kann interessant sein, beispielsweise um die integrale Belastung des Krans in der Kransteuerung zu speichern, um etwa bei Verkauf eine verlässliche Aussage über den Zustand des Kranes treffen zu können.

Die Information kann alternativ oder zusätzlich auch in der Cloud oder in einem per Datenverbindung angebundenen Speicher gespeichert werden, um etwa bei einem Servicedienstleister automatisch einen Wartungsauftrag auszulösen oder ähnliches.

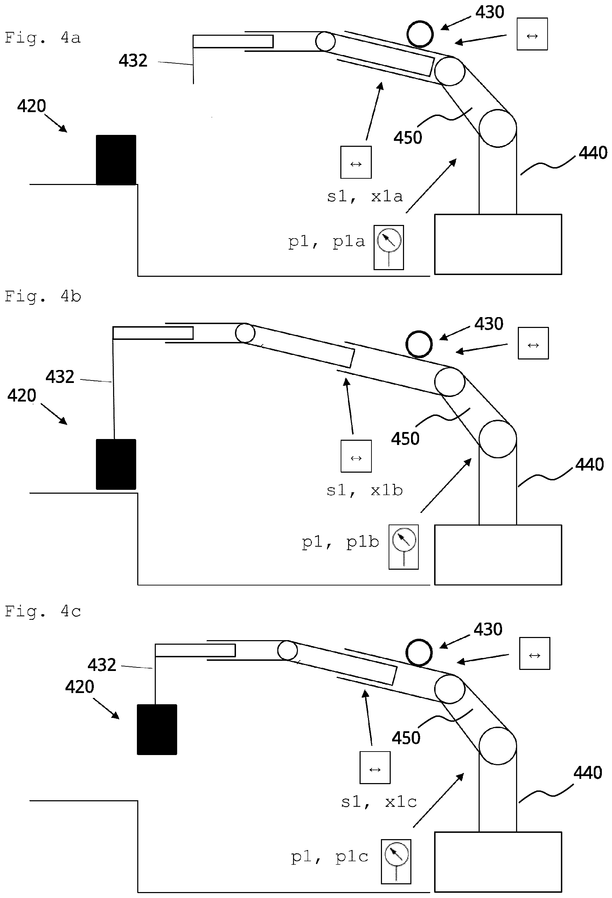

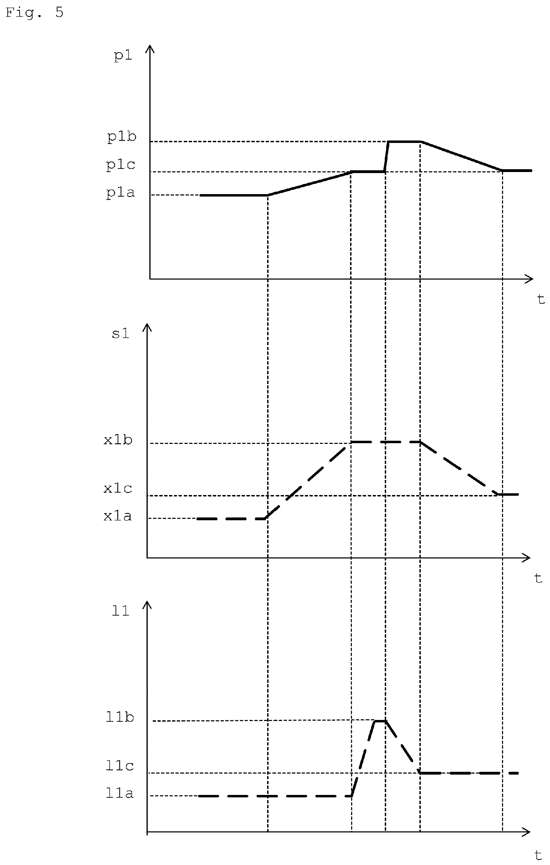

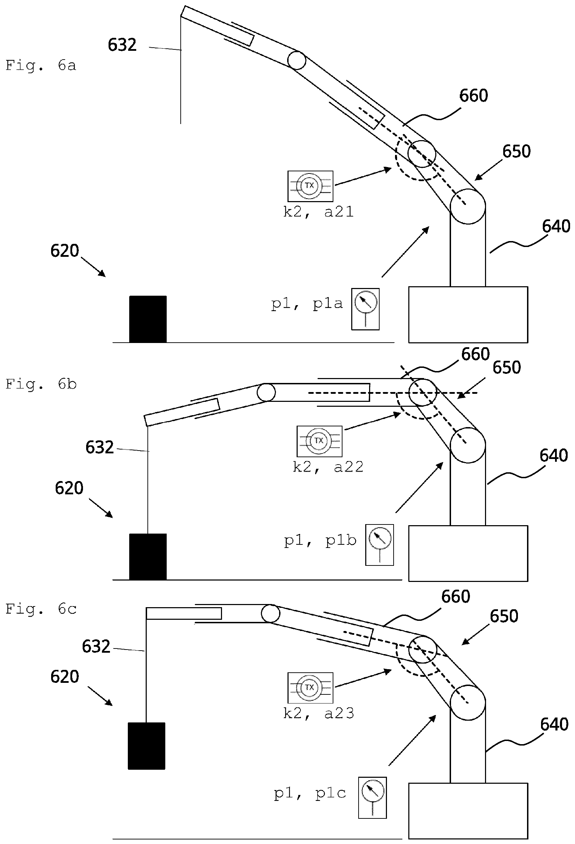

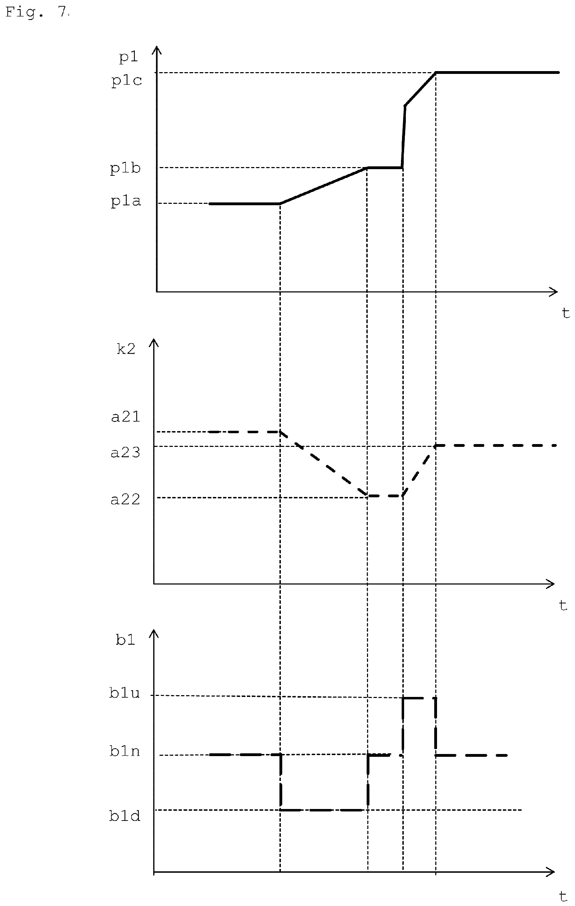

Um die bereits beschriebene Komplexität bei der automatischen Bestimmung einer Tätigkeit, die mittels eines Kranes verrichtet wurde, erneut zu verdeutlichen, zeigen die Figuren 4 und 6 nachfolgend jeweils Beispiele für einige Zustände, die während eines Hubes einer Last auftreten können. Die Fig. 5 und 7 zeigen die korrespondierenden Messwerte ausgewählter Sensoren des Krans, aufgrund derer auf die durchgeführte Tätigkeit geschlossen werden soll.

Die Figuren 4a bis 4c zeigen schematisch 3 Zustände eines Krans, die sich in der dargestellten zeitlichen Reihenfolge (von a) über b) nach c)) bei der Aufnahme einer Last 420 ergeben können. In umgekehrter Reihenfolge kann die Tätigkeit eines Absetzens einer Last entsprechen. Der dargestellte Kran verfügt über eine Seilwinde 430 mit einem Lastseil 432.

Wie dargestellt, erfolgt der einfache Hubvorgang in Fig. 4 mittels der Verwendung lediglich zweier Aktoren, die eine Teleskopierbewegung eines Schubarms 440 bewirken und die eine Länge des Lastseils mittels einer am Kran montierten Wind variieren. Die unterschiedlichen Schubstellungen x1a, x1b, x1c werden mit beispielsweise mit einem Schubstellungssensor s1 erfasst, wie in der mittleren Darstellung der Fig. 5 gezeigt. Bei dem dargestellten Hub wird die Last 420 ferner mit dem Lastseil 432 angehoben, wobei die unterschiedlichen Seillängen I1a, I1b, I1c durch einen Längensensor I1 erfasst werden, wie in der unteren Darstellung der Fig. 5 dargestellt. Zusätzlich werden mit einem Drucksensor p1 die unterschiedlichen Hydraulikdrücke p1a, p1b, p1c (illustriert in der obersten Darstellung der Fig. 5) eines nicht dargestellten Hubzylinders erfasst, der sich zwischen der Säule 440 und dem Hauptarm 450 des Krans befindet. Die dargestellten Sensoren stellen nur eine beispielhafte Auswahl der verwendbaren Sensoren dar.

In den Figuren 5a und 5b sind zeitliche Verläufe von aufgezeichneten Sensorsignalen, gezeigt, die zur Erkennung des Hubes dienen können.

Die aufgezeichneten Sensorsignale können beispielsweise auch dazu verwendet werden, um ein Modell mittels eines Machine Learning Algorithmus zu trainieren, welches dann basierend auf diesen Sensorsignalen einen Hub einer Last identifizieren soll.

Die Figuren 6a bis 6c zeigen schematisch 3 Zustände eines Krans, die sich in der dargestellten zeitlichen Reihenfolge (von a) über b) nach c)) bei der Aufnahme einer Last 620 ergeben können. Der dargestellte Kran verfügt nicht über eine Seilwinde sondern über ein Lastseil 632 fester Länge.

Wenngleich der Hub, also die Bewegung der Last 620 der Bewegung der Last in den Fig. 4a-c sehr ähnlich ist, kommen im in den Fig. 6a-c gezeigten Fall andere Aktoren zum Einsatz.

Wie dargestellt erfolgt die Aktivitätsabfolge Hub durch eine Knickbewegung eines Knickarms 660 relativ zum Hauptarm 650. Die unterschiedlichen Knickstellungen a21, a22, a23 werden mit einem Knickwinkelsensor erfasst. Mit einem Drucksensor p1 werden die unterschiedlichen Hydraulikdrücke p1a, p1b, p1c des Hubzylinders zwischen Hauptarm 650 und Säule 640 erfasst. Die dargestellten Sensoren stellen wieder nur eine beispielhafte Auswahl der verwendbaren Sensoren dar.

In der Figuren 7 sind zeitliche Verläufe der aufgezeichneten Sensorsignale für den in den Fig. 6a bis 6c dargestellten Hub gezeigt.

Wie dargestellt, können für einen Hub einer Last um eine identische Höhe unterschiedliche Aktoren verwendet werden, sodass sogar ganz unterschiedliche Sensoren zeitlich veränderliche Messwerte liefern, wenngleich die Tätigkeit des Krans identisch ist. Selbst identische Sensoren können unterschiedliche Messwerte liefern, wie aus den Druckverläufen der Figuren 5 und 7 ersichtlich ist.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausführbare, prozessorausführbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = applicationspecific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Ein Computerimplementiertes Verfahren (100) zum Identifizieren von Tätigkeiten eines Krans, umfassend:
Empfangen eines Satzes von Messwerten von Sensoren (110), die einen zeitlichen Verlauf von Betriebsparameter des Krans wiedergeben;
Bestimmen einer von dem Kran durchgeführten Tätigkeit (120) basierend auf dem Satz von Messwerten von Sensoren und einem maschinell erlernten Modell des Krans.

2. Verfahren gemäß Anspruch 1, bei dem das Modell des Krans in einem neuronalen Netzwerk erlernt ist.

3. Das Verfahren gemäß Anspruch 1 oder 2, ferner umfassend:
Aktualisieren eines die Tätigkeit angebenden Zählers mit einem Wert, der auf dem Ausgabeparameter basiert.

4. Das Verfahren gemäß Anspruch 3, wobei der Zähler basierend auf dem Ausgabeparameter erhöht wird.

5. Das Verfahren gemäß einem der Ansprüche 1 bis 4, wobei die von dem Kran durchgeführte Tätigkeit einen Hub einer Last mittels des Krans anzeigt.

6. Das Verfahren gemäß Anspruch 5, wobei die von dem Kran durchgeführte Tätigkeit einen Typ des Hubes angibt, wobei der Typ des Hubes zumindest durch eine an dem Hub beteiligte Komponente charakterisiert ist.

7. Das Verfahren gemäß einem der vorhergehenden Ansprüche, wobei die Betriebsparameter des Krans einen oder mehrere aus der Menge Drehwinkel, Knickwinkel, Schubstellung und Hydraulikdruck umfassen.

8. Das Verfahren gemäß einem der Ansprüche 3 bis 6, ferner umfassend: Beschränken eine mit dem Kran bewegbaren Last basierend auf dem Zählerstand.

9. Das Verfahren gemäß einem der Ansprüche 3 bis 7, ferner umfassend: Ausgeben eines Wartungssignals, das die erforderliche Wartung zumindest einer Komponente des Krans anzeigt, wenn der Zähler einen Referenzwert erreicht.

10. Kransteuerung (200), umfassend:
Eine Eingangsschnittstelle (210) zum Empfangen eines Satzes von Messwerten von Sensoren, die einen zeitlichen Verlauf von Betriebsparameter eines Krans weidergeben; und
Einen Prozessor (220), der ausgebildet ist zum Bestimmen einer von dem Kran durchgeführten Tätigkeit basierend auf dem Satz von Messwerten von Sensoren und einem maschinell erlernten Modell des Krans.

11. Die Kransteuerung gemäß Anspruch 10, ferner umfassend:
Einen Speicher (230) zum Speichern eines Zählers, der basierend auf dem Ausgabeparameter aktualisiert wird.

12. Die Kransteuerung gemäß Anspruch 10 oder 11, ferner umfassend:
Eine Steuerungsschaltung, die ausgebildet ist, Aktuatoren des Krans zu steuern, wobei die die Steuerungsschaltung ausgebildet ist, zumindest einen kinematischen Parameter zumindest eines Aktuators zu beschränken, wenn der Zähler einen Referenzwert erreicht.

13. Kran mit einer Kransteuerung gemäß einem der Ansprüche 11 oder 12.

14. Kran gemäß Anspruch 13, ferner umfassend:
Ein Bedienpaneel mit einem Userinterface, das ausgebildet ist, mit dem Zähler assoziierte Informationen anzuzeigen.

15. Computerprogramm mit einem Programmcode, der die Ausführung eines Verfahrens gemäß einem der Ansprüche 1 bis 8 bewirkt, wenn der Programmcode mittels eines Prozessors ausgeführt wird.
